# EUROPEAN PATENT SPECIFICATION

(11) **EP 3 532 283 B1**
(45) Date of publication and mention of the grant of the patent: **17.11.2021**
(21) Application number: 17798354.1
(22) Date of filing: 24.10.2017
(51) Int. Cl.: B32B 17/06, B32B 5/18, B32B 7/022, B32B 7/12

(54) **STACK STRUCTURE FOR IMPROVED PUNCTURE RESISTANCE**
STAPELSTRUKTUR FÜR VERBESSERTE DURCHSTOSSFESTIGKEIT
STRUCTURE EMPILÉE POUR UNE MEILLEURE RÉSISTANCE À LA PERFORATION

(30) Priority: 27.10.2016 US 201662413647 P
(43) Date of publication of application: 04.09.2019
(73) Proprietor: Corning Incorporated, Corning, NY 14831 (US)
(72) Inventor: CHU, Polly Wanda, Painted Post, New York 14870 (US); GROSS, Timothy Michael, Corning, New York 14830 (US); MATTOS, JR, Louis, Painted Post, New York 14870 (US); SMITH, Timothy Paul, Painted Post, New York 14870 (US)
(74) Representative: Elkington and Fife LLP
(86) International application number: PCT/US2017/058030
(87) International publication number: WO 2018/081080

(56) References cited:
- WO-A1-2015/113023
- US-A1- 2013 169 590
- US-A1- 2014 342 148
- US-A1- 2016 009 593
- US-A1- 2016 083 282

## Description

### BACKGROUND

### Field

The present disclosure relates generally to thin glass stack structures and, more particularly, to thin glass stack structures disposed on the user-facing side of devices.

### Technical Background.

Currently, thin glass, disposed on the user-facing side of a device, fails at low puncture testing forces due to a local biaxial flexure produced by the testing implement upon impact with the thin glass. One solution has been to use thicker glass that is more resistant to local biaxial flexure, however, in some applications such as in fingerprint sensors the functionality is quite sensitive to the glass thickness. Thus, thicker glass is disadvantageous. Another solution is to put a layer, or multiple layers, of polymeric material on the outer surface of the thin glass to improve puncture resistance. However, this solution has a negative consequence in that the user-facing surface of the device no longer has the hardness (including scratch and chemical resistance) and aesthetics (look and feel) of a glass surface. Accordingly, there is a need for a thin glass structure that can be disposed on the user-facing side of a device and that has improved puncture resistance. US 2013/0169590 A1 relates to displays for electronic devices having a certain amount of impact resistance.

### SUMMARY

The invention relates to a stack assembly, comprising: a glass element comprising a thickness of less than or equal to 200 microns; and a support layer adjacent to the glass element, the support layer comprising a first layer and a second layer, wherein the first layer comprises a first material and an adhesive material that joins the first material with the glass element, wherein the first layer comprises a first stiffness of from 9 × 10⁵ N/m to 2.0 × 10⁶ N/m, and the second layer comprises a second stiffness of from 1 × 10⁵ N/m to 3 × 10⁵ N/m, and wherein the first stiffness and the second stiffness are measured according to the method described below in the section entitled "Stiffness Measurements". The present disclosure sets forth glass stack configurations that dramatically improve the puncture resistance of the thin glass elements, as evidenced by pen drop test failure height increases. The stack configuration includes multiple layers disposed on one side of the thin glass element. A first layer has high stiffness and is coupled to one side of the thin glass element, for example with a thin layer of adhesive, for example pressure sensitive adhesive. The high stiffness of the first layer reduces the local biaxial flexure in the thin glass element during impact events, for example during a puncture test. A second, low stiffness, layer is coupled to the high stiffness first layer, on the same side of the thin glass element. The low stiffness second layer distributes and absorbs energy during the impact event. The glass stack may be used in a variety of applications, particularly where puncture resistance may be beneficial, and where the look and feel or other properties (for example, hermeticity, scratch resistance) of glass are desired. For example, the glass stack may be used in a fingerprint sensor, in a user-facing portion of a device housing, for example in an electronic device housing, in a backsplash, or whiteboard.

**The** accompanying drawings are included to provide a further understanding of the principles described, and are incorporated in and constitute a part of this specification. The drawings illustrate one or more embodiment(s), and together with the description serve to explain, by way of example, principles and operation of those embodiments. It is to be understood that various features disclosed in this specification and in the drawings can be used in any and all combinations.

### BRIEF DESCRIPTION OF THE DRAWINGS

FIG. 1 is a schematic side view of a Comparative Stack structure.
FIG. 2 is a schematic side view of a stack structure according to some embodiments.
FIG. 3 is a schematic top view of a stack support structure according to some embodiments.
FIG. 4 is a schematic bottom view of the stack support structure of FIG. 3 according to some embodiments.
FIG. 5 is a schematic side view of the stack support structure of FIG. 3 (and a stack structure) according to some embodiments as taken along line 5-5 of FIG. 4.
FIG. 6 is a plot of load (in Newtons (N) on the Y-axis) versus displacement (in millimeters (mm) on the X-axis) for various materials, used to determine stiffness.

### DETAILED DESCRIPTION

Stack structures will now be described more fully hereinafter with reference to the accompanying drawings in which exemplary embodiments of the disclosure are shown. Whenever possible, the same reference numerals are used throughout the drawings to refer to the same or like parts. In some embodiments the stack structures may be used in a device for example an electronic device, for example a device having a sensor wherein the thin glass sheet is used as a cover for the sensor. The stack structures of the present disclosure greatly improve the puncture resistance or ability to absorb impact energy without failure, as measured with a pen drop test for example, of thin glass elements disposed at a user interface of a device.

### Pen Drop Test.

One test for evaluating the puncture resistance of stack that includes a thin glass element, includes dropping a pen onto the stack from increasing heights until the glass fractures. The test is conducted as follows, and was used to measure pen drop heights disclosed herein. The samples were tested with the load imparted to the side of the stack having the thin glass element thereon, with the opposite side of the stack being supported by a polished aluminum plate (9.5 mm thick, grade 6061). The stack was simply set on the aluminum plate, no tape was used to couple the stack with the aluminum plate. A tube was used to guide the pen to the sample, and the tube sat on the top surface of the sample so that the longitudinal axis of the tube was generally perpendicular to the top surface of the sample. The tube had an outside diameter of 2.54 centimeter (cm) (1 inch) and an inside diameter of 1.4 cm (nine sixteenths of an inch). After each drop, the tube was relocated relative to the sample to guide the pen to a different impact location on the sample. All drops were performed near the center area of the sample, no drops were performed on the edge. The pen was a BIC, Easy Glide, Fine, having a ball point of 0.7mm diameter, and a weight of 5.75 grams. The pen was dropped with the cap attached to the back end so that the ball point could interact with the test sample. The pen was first dropped from a height of 10 cm, and the height incremented by 5 cm per drop until the drop caused the thin glass element to fracture. The drop height causing fracture was then recorded. The maximum drop height was 75 cm. Thus, a pen drop height of 75 cm indicates that the thin glass element did not fracture during that test. The pen was changed to a new pen after every 5 drops, and for each new sample tested.

Although the pen drop test described above is an example of dynamic loading, one would generally expect that, directionally, given the characteristics and thicknesses of materials in the stack assembly, the test is indicative of the stack's ability to absorb energy without failing. That is, a stack assembly's ability to withstand a higher dynamic load than does another stack assembly is also generally indicative that it will withstand a higher static load as well, for example the static loading of other puncture resistance tests, for example pressing with a stainless steel tip or tungsten carbide ball.

### Comparative Stack Structure

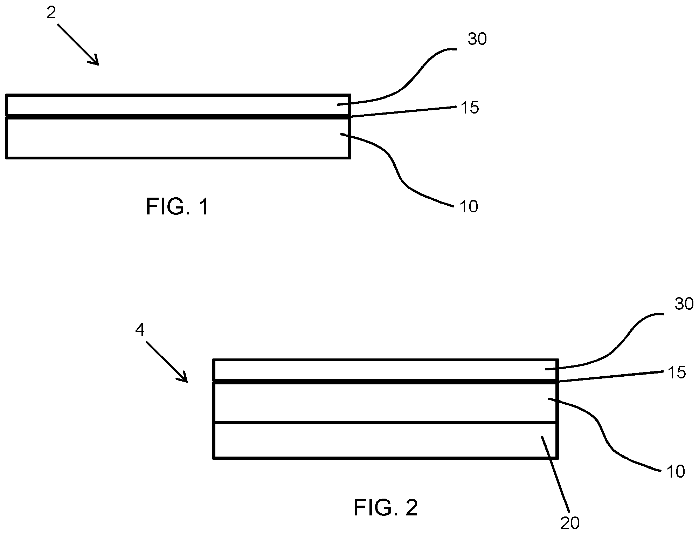

A structure of a comparative stack 2 is shown in FIG. 1. Comparative stack 2 includes a thin glass element 30 coupled to a first layer 10 via adhesive 15. In all embodiments of the comparative stack 2, the thin glass element 30 was 100 micrometer (hereinafter micrometer(s), micron(s), and/or µm) thick glass substrate made according to the processes set forth in US Patent 9,321,677 (available from Corning Incorporated, Corning, NY).
Comparative Example 1. In this example of comparative stack 2: first layer 10 was a 1.1 mm thick aluminosilicate glass having a stiffness of 1.6 × 10⁶ Newtons per meter (N/m); adhesive 15 was a 50 micron thick pressure sensitive adhesive (PSA) sheet available from 3M Corporation (St. Paul, MN) as code 8212. The stack had an average pen drop failure height of 34 cm (+/- 8 cm).
Comparative Example 2. In this example of comparative stack 2: first layer 10 was a 1.1 mm thick aluminosilicate glass having a stiffness of 1.6 × 10⁶ N/m; adhesive 15 was a 25 micron thick PSA sheet available from 3M Corporation (St. Paul, MN) as code 8211. The stack had an average pen drop failure height of 28 cm (+/- 3 cm).
Comparative Example 3. In this example of comparative stack 2: first layer 10 was a 4.8 mm thick piece of acrylonitrile butadiene styrene (ABS), trade name Kydex® T available from Kydex, LLC (Bloomsburg, PA) which has a stiffness of 9.4×10⁵ N/m, wherein the stiffness of this material is independent of thickness; adhesive 15 was a 50 micron thick PSA. This comparative stack had an average pen drop failure height of 10 cm +/- 0.
Comparative Example 4. In this example of comparative stack 2: first layer 10 was a 4.8 mm thick piece of ABS, trade name Kydex® T, which has a stiffness of 9.4×10⁵ N/m, wherein the stiffness of this material is independent of thickness; adhesive 15 was a 25 micron thick PSA. This comparative stack had an average pen drop failure height of 10 cm +/- 0.
Comparing Comparative Example 1 with Comparative Example 2, as well as comparing Comparative Example 3 with Comparative Example 4, it is seen that whether the thickness of the adhesive 15 is 50 microns or 25 microns, the ability of the comparative stack 2 to absorb impact energy is about the same.

In general, one would ordinarily think that including a less stiff material in a stack would lead to a greater ability of the stack to absorb energy and, thus, a higher pen drop height. However, comparing Comparative Example 3 with Comparative Example 1 (or Comparative Example 4 with Comparative Example 2) it is seen that the use of the less stiff material of Comparative Example 3 (stiffness of 9.4×10⁵ N/m being less than the stiffness 1.6 × 10⁶ N/m of Comparative Example 1) actually had the opposite effect—the pen drop height dramatically decreased from about 30 cm to 10 cm.

From the study of Comparative Examples 1-4, the inventors found that simply supporting the thin glass element with a more compliant material (i.e., less stiff) was not sufficient to increase the puncture resistance of the thin glass element. Instead, upon impact (for example with a pen) the less stiff material allows biaxial flexure of the glass element, which leads to increased failure. Thus, the materials supporting the thin glass element needed to be configured in a different manner to improve the ability of the stack to resist puncture, i.e., increase the ability to absorb energy without failure.

The inventors found that using a two layer structure, with the layers appropriately configured relative to one another, allowed the stack to survive higher pen drop heights, i.e., the stack was able to absorb more load energy, without damage to the thin glass element. The stack includes a first layer coupled to the thin glass element, for example on the side of the thin glass element disposed away from the user. The first layer is coupled to the thin glass element by an adhesive, for example a PSA, for example a PSA having a thickness from 25 to 50 microns. If the adhesive becomes too thick, or too compliant, then there is a risk that the thin glass element will be subject to biaxial flexure and will not be able to absorb as much impact energy. The first layer is then supported by a second layer having less stiffness than the first layer.

The first layer should be stiff. The stiffness of the first layer should be high to increase resistance to biaxial flexure of the thin glass element. Biaxial flexure is the observed failure mode for thin glass elements during puncture events such as pen drop testing. The 1.1 mm thick aluminosilicate glass (with stiffness of 1.6 × 10⁶ N/m) outperformed the ABS with lower stiffness (9.4 × 10⁵ N/m) when pen drop testing these materials alone. Thus, higher stiffness of the first layer (supporting the thin glass element) reduces the ability of the thin glass element to bend locally and, thus, reduces the biaxial flexure stress.

Beneath the stiff first layer there is disposed a second layer having low stiffness for energy absorption. Further, it is advantageous for the composite stiffness of the first layer and the second layer together to be low.

FIG. 2 shows a stack according to some embodiments. More specifically, stack 4 includes a thin glass element 30 coupled to a first layer 10 by an adhesive 15. The first layer 10 is, in turn, supported by a second layer 20. In all embodiments of the stack 4, the thin glass element 30 was 100 micron thick glass substrate made according to the processes set forth in US Patent 9,321,677 (available from Corning Incorporated, Corning, NY).
Example 1. In this example of stack 4: first layer 10 was a 1.1 mm thick piece of aluminosilicate glass, which had a stiffness of 1.6×10⁶ N/m; adhesive 15 was a 50 micron thick PSA; second layer 20 was an 0.8 mm thick piece of foamed polyethylene, wherein the combined stiffness of the first layer 10 and second layer 20 was 2.9×10⁵ N/m. Thin glass element 30 was 100 microns thick. This stack had an average pen drop failure height of 66 cm +/- 8.
Example 2. In this example of stack 4: first layer 10 was a 1.1 mm thick piece of aluminosilicate glass, which had a stiffness of 1.6×10⁶ N/m; adhesive 15 was a 25 micron thick PSA; second layer 20 was an 0.8 mm thick piece of foamed polyethylene, wherein the combined stiffness of the first layer 10 and second layer 20 was 2.9×10⁵ N/m. Thin glass element 30 was 100 microns thick. This stack had an average pen drop failure height of 49 cm +/- 15.

**As** was seen above with Comparative Example 1 and Comparative Example 2, comparing Example 1 with Example 2, it is again seen that the thickness of the PSA can range from 25 microns to 50 microns without much statistically significant effect on the pen drop results. Accordingly, the adhesive coupling the first layer to the thin glass element can be 50 microns or less.

Further, comparing Examples 1 and 2 with Comparative Examples 1 and 2, respectively, it is seen that the former far outperformed the latter in pen drop height, indicating an increased ability to absorb energy upon impact. That is, a second (more compliant, less stiff) layer beneath the first layer allows the stack to absorb more impact energy before failure of the thin glass element, even when the stiffness of the first layer is the same. Further, comparing Examples 1 and 2 with Comparative Examples 3 and 4, respectively, when the first layer in a two layer stack is supported by a more compliant second layer, the first layer can be made of a stiffer material than would otherwise be thought possible. More specifically, the first layer in Examples 1 and 2 had a stiffness of 1.6×10⁶ N/m, which is higher than the stiffness (9.4×10⁵ N/m) of the first layer in Comparative Examples 3 and 4, yet the stack in Examples 1 and 2 had an increased pen drop height compared with that in Comparative Examples 3 and 4, thus indicating an advantageously increased ability to absorb impact energy.

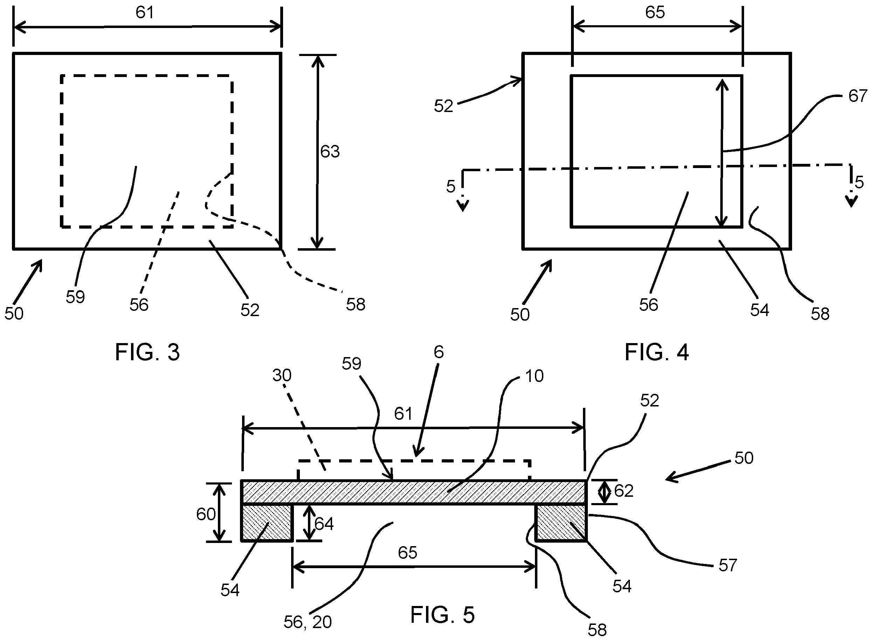

FIGS. 3-5 show a stack 6 according to some embodiments, wherein a second layer 20 may be made by fluid, for example air (or any other suitable gas, or in some embodiments by an evacuated space, and in other embodiments liquid), disposed underneath the first layer. More specifically, support 50 provides one example of how a second layer 20 may be made from gas disposed underneath first layer 10. Support 50 may include a cap 52, and a perimeter support 54. Cap 52 may be of a generally rectangular shape with a first dimension 61 and a second dimension 63. In some embodiments, first dimension 61 and second dimension 63 may be equal to one another, but such need not be the case as in other embodiments they can be unequal. Perimeter support 54 may be in the shape of a picture frame having an outer wall 57 and a cavity 56 at its center, wherein the cavity 56 is defined by a perimeter wall 58. Cavity 56 may have a first dimension 65 and a second dimension 67. In some embodiments the first dimension 65 and the second dimension 67 may be equal to one another, but such need not be the case as in other embodiments they can be unequal. A center portion 59 of cap 52 may be disposed over the cavity 56. The support 50 includes an overall thickness 60, whereas the cap 52 has a thickness 62 (which is also the thickness of the center portion 59), and the perimeter wall 54 has a thickness 64, which also corresponds to the thickness of the cavity 56. Accordingly, a first layer 10 with thickness 62 is formed of the center portion 59, and a second layer 20 of thickness 64 is formed of the gas (or other fluid) within cavity 56. According to some embodiments: the cap 52 may have a first dimension 61 of about 12. 7 mm and a second dimension 63 of about 10.1 mm;, the cavity 56 may have a first dimension 65 of about 7.2 mm and a second dimension 67 of about 7.2 mm; the thickness 60 may be about 4.8 mm, the thickness 62 may be about 1.8 mm, and the thickness 64 may be about 3 mm.

**As** shown in dashed lines, thin glass element 30 may be disposed on the center 59 of cap 52, thereby forming a stack 6 formed of thin glass element 30, first layer 10 (formed of the center 59 of cap 52), and second layer 20 (formed of air within cavity 56).

Example 3. In this example of stack 6: first layer 10 was a 1.8 mm thick piece of ABS (formed by the center 59 of cap 52), which had a stiffness of 9.4×10⁵ N/m; second layer 20 was air (disposed within cavity 56), wherein the combined stiffness of the first layer 10 and second layer 20 was 1.0×10⁵ N/m. Thin glass element 30 was a 100 microns thick. This stack had an average pen drop failure height of 75 cm +/- 0.

Comparing Example 3 with either one or both of Comparative Examples 3 and 4, when the first layer in a two layer stack is supported by a more compliant second layer, the first layer can be made of a stiffer material than would otherwise be thought possible. More specifically, the first layer in Example3 had a stiffness of 9.4×10⁵ N/m, which is the same stiffness (9.4×10⁵ N/m) of the first layer in Comparative Examples 3 and 4, yet the stack in Example 3 had an increased pen drop height compared with that in Comparative Examples 3 and 4, thus indicating an advantageously increased ability to absorb impact energy.

Further, comparing Example 3 with either one or both of Examples 1 and 2, the ABS with hollow cavity (with a composite stiffness of 1 × 10⁵ N/m) outperformed the aluminosilicate with PE foam under-layer (having a higher composite stiffness of 2.9 × 10⁵ N/m. Accordingly, stacks having a lower composite stiffness (derived from combined stiffnesses of the first layer and the second layer) are better able to absorb impact energy (as evidenced by higher pen drop heights) thereby reducing failure to the thin glass element.

**The** effect of the stack configuration on increasing the puncture resistance of the glass element is largely independent of the area of the sample. That is, because the affected area around the impact event is millimeters at most, as long as the stiffnesses are present in that local area, the puncture resistance increasing effect will be attained for that area of the sample. Tested parts were on the order of 100 mm × 150 mm and 150 mm × 200 mm.

### Thin Glass Element 30.

Although the thin glass element 30 described above in connection with the Comparative Examples 1-4, and Examples 1-3, was 100 microns thick piece of glass processed according to the principles in US Patent glass substrate made according to the processes set forth in US Patent 9,321,677 (available from Corning Incorporated, Corning, NY), such need not be the case. The concepts described herein can be used with other thin glass elements of different compositions and manners of making. For example, the thin glass element may be an alkali-free or alkali-containing aluminosilicate, borosilicate, boroaluminosilicate, or silicate glass composition, the glass element may be strengthened (for example thermally strengthened or chemically strengthened, for example ion-exchanged) but need not be, and may be a glass, a glass-ceramic, a ceramic material, or composites thereof. Additionally, the thin glass element need not be 100 microns thick. The concepts described herein are used with glass elements having a thickness of less than or equal to 200 microns. That is, generally, as the glass element gets thicker, it will itself be more and more able to resist puncture events by itself and, therefore, the concepts described herein become less and less advantageous to improving the puncture resistance of that particular glass element. For example, the glass element may have a thickness of 200 microns, 190 microns, 180 microns, 175 microns, 170 microns, 160 microns, 150 microns, 140 microns, 130, microns, 125 microns, 120 microns, 110 microns, 100 microns, 90 microns, 80 microns, 75 microns, 70 microns, 60 microns, 50 microns, 40 microns, 30 microns, 25 microns, 20 microns, or 10 microns, or any sub-ranges between any of the foregoing listed thicknesses.

### First Layer 10.

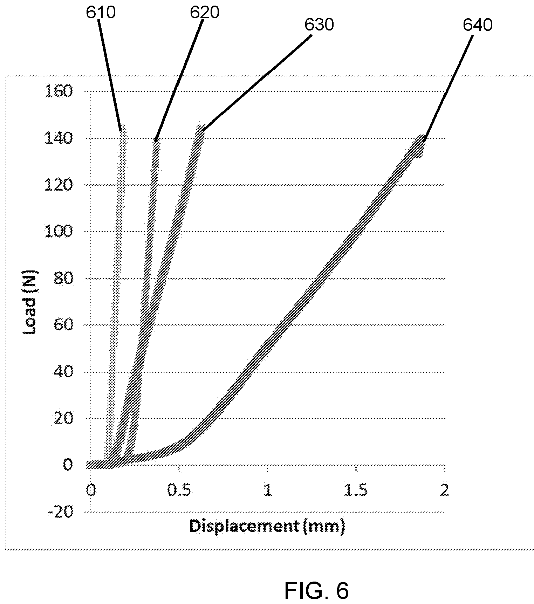

The first layer 10 may be made of various materials, provided the material has sufficient stiffness to (when in combination with any adhesive layer 15 that may be present) prevent undue biaxial flexure of the thin glass element 30. The stiffness of the first layer ranges from 9 × 10⁵ N/m to 2.0 × 10⁶ N/m, as measured with respect to the aluminosilicate glass and ABS material described below in "Stiffness Measurements". In some embodiments, the material for layer 10 is at least about two times stiffer than the material used for layer 20. The thickness of the first layer 10 is not particularly limited in that the stiffness is more important than the thickness to preventing undue biaxial flexure. Thus, as long as the load remains along the linear part of the load-displacement curve for the particular material (see FIG. 6), the effect of limiting biaxial flexure will be independent of the thickness of the material. Thus, the thickness may be chosen according to the requirements for its application in a particular stack. Examples of materials that may be used for first layer 10 include aluminosilicate glass and ABS.

### Second Layer 20

The second layer 20 may be made of various materials, provided they have sufficient energy absorbing capacity to allow some movement or deflection of the first layer as a whole, i.e., without the first layer locally bending at too tight a radius wherein it would allow biaxial flexure of the thin glass element. That is, as more readily envisioned with the embodiments depicted in FIGS. 3-5, the center of the first layer 10 may bend, albeit at a large radius of curvature (large enough to avoid biaxial flexure of thin glass element 30), instead of moving up and down as a completely planar object. For example: the stiffness of the second layer 20 may be up to half that of the first layer 10. Examples of materials that may be used for second layer 20 include: foamed polyethylene, fluid, gas, air, evacuated space, liquid, gel. Because of the low stiffness of the second layer, the material of the second layer was not measured directly via ball impacting into the material, but instead was measured as part of a stack as described below with respect to the foamed polyethylene in the section entitled "Stiffness Measurement". When measured as described below the stiffness of the second layer 20 is from 1 × 10⁵ N/m to 3 × 10⁵ N/m. The thickness of the second layer 20, similarly to that of the first layer 10, is not particularly limited in that the stiffness is more important than the thickness to energy absorbing capacity. Thus, as long as the load remains along the linear part of the load-displacement curve for the particular material (see FIG. 6), the effect of energy absorbing capacity will be independent of the thickness of the material. Thus, the thickness may be chosen according to the requirements for its application in a particular stack.

### Stiffness Measurements

The stiffness of materials used in a stack was determined as follows. A 16 mm diameter tungsten carbide ball was pressed into the surface of the layer or multilayer element being measured. The displacement was measured as a function of load from 0 to 140 N, and plotted as shown in FIG. 6. The stiffness measurement was made from the slope of the plot (change in load/change in displacement) from 20 to 140 N. As seen from FIG. 6: line 610 is a plot for a 1.1 mm thick piece of aluminosilicate glass, which has a stiffness of 1.6×10⁶ N/m; line 620 is a plot for a piece of ABS material, trade name Kydex® T which has a stiffness of 9.4×10⁵ N/m, wherein the stiffness of this material was independent of thickness; line 630 is a plot for a 1.1 mm thick piece of aluminosilicate glass with a 0.8 mm thick foamed polyethylene (PE) layer supporting the aluminosilicate glass (i.e., disposed between the glass and the test stage so that the tungsten carbide ball pressed on the sample on the side of the glass), wherein this two layer structure had a stiffness of 2.9×10⁵ N/m; line 640 is a plot for a piece of ABS material, trade name Kydex® T, which had a thickness of 1.8 mm and was supported around its edges (as described in connection with FIGS. 3-5) so as to be disposed over a cavity of air having a thickness of 3 mm, with the resulting stiffness at its center (over the cavity of air) of 1.0×10⁵ N/m.

The terms "substantial," "substantially," and variations thereof as used herein are intended to note that a described feature is equal or approximately equal to a value or description. For example, a "substantially planar" surface is intended to denote a surface that is planar or approximately planar. Moreover, as defined above, "substantially similar" is intended to denote that two values are equal or approximately equal. In some embodiments, "substantially similar" may denote values within about 10% of each other, such as within about 5% of each other, or within about 2% of each other.

It will be apparent to those skilled in the art that various modifications and variations can be made to the present disclosure without departing from the scope of the disclosure. Thus, it is intended that the present invention cover the modifications and variations of this disclosure provided they come within the scope of the appended claims.

For example, although the first layer 10 was shown as only one layer, it may itself be a composite of more than one layer presenting a combined thickness and composite stiffness derived from the thicknesses and stiffnesses of the layers from which it is made. Similarly, although the second layer 20 was shown as only one layer, it may itself be a composite of more than one layer presenting a combined thickness and composite stiffness derived from the thicknesses and stiffnesses of the layers from which it is made. Still further, although the adhesive 15 was shown as only one layer, it may itself be a composite of more than one layer presenting a stiffnesses of the layers from which it is made.

Further, for example, although the second layer 20 was described as having the same general shape as the first layer 10, such need not be the case. In order to provide a varied ability to absorb energy, the second layer 20 may have a different shape than the first layer 10; for example by combining the configurations of the embodiments of FIGS. 2-5. More specifically, the second layer 20 is made of a material having a lower stiffness than that of the first material 10 (as with the embodiments of FIG. 2) but also have a frame-type configuration (as with the perimeter support 54 of FIGS. 3-5), thereby providing two different stiffnesses, each less than that of the first layer 10.

Still further, for example, although the support 50 (as well as each the cap 52 and perimeter support 54) was described as being rectangular, other shapes are possible, for example, elliptical, triangular, polygonal. Additionally, although the cap 52 was described as having a similar shape as either one or both of the perimeter support 54 and the cavity 56, such need not be the case; they may have different shapes in some embodiments (including a cavity 56 whose shape is not similar to that of the outer wall 57 of perimeter support 54, for example, wherein the cavity perimeter wall(s) are not parallel to the outer wall (s) 57 of the perimeter support 54). Moreover, although the cap 52 and support 54 were described as being two separate pieces, such need not be the case; they may be formed as a monolith; or they may be formed as two separate pieces bonded to one another.

For example, although the layers were described as sheet, they need not be. Instead, the layers may be webs of indeterminate length and the product rolled for storage and distribution.

For example, one or more layers 10, 15, and/or 20, may include decorative elements that may be visible through one or more sides of the stack, particularly through the glass element 30.

For example, although no adhesive was present between the first layer 10 and the second layer 20, adhesive could be present. In the event that adhesive is present between the first layer 10 and the second layer 20, the stack configuration will still increase the puncture resistance of the glass element (all other things being equal) as long as the adhesive stiffness is small enough so that the stiffness of the second layer 20 dominates the impact event loading. That is, similarly to the adhesive 15 having little impact on the ability of the layer 10 to support the glass element to resist biaxial flexure, the adhesive between layers 10 and 20 can be chosen to have little impact on the ability of the layer 20 to absorb energy of the impact.

## Claims

1. A stack assembly, comprising:
a glass element (30) comprising a thickness of less than or equal to 200 microns; and
a support layer adjacent to the glass element (30), the support layer comprising a first layer (10) and a second layer (20),
wherein the first layer (10) comprises a first material and an adhesive material (15) that joins the first material with the glass element (30),
wherein the first layer (10) comprises a first stiffness of from 9 × 10⁵ N/m to 2.0 × 10⁶ N/m, and the second layer (20) comprises a second stiffness of from 1 × 10⁵ N/m to 3 × 10⁵ N/m, and
wherein the first stiffness and the second stiffness are measured according to the method in the description.

2. The stack assembly of claim 1, wherein the adhesive material (15) comprises a thickness of from 25 microns to 50 microns.

## Patentansprüche

1. Stapelbaugruppe, umfassend:
ein Glaselement (30), umfassend eine Dicke von weniger als oder gleich 200 Mikrometer; und
eine dem Glaselement (30) benachbarte Trägerschicht, wobei die Trägerschicht eine erste Schicht (10) und eine zweite Schicht (20) umfasst,
wobei die erste Schicht (10) ein erstes Material und ein Klebematerial (15) umfasst, das das erste Material mit dem Glaselement (30) verbindet,
wobei die erste Schicht (10) eine erste Steifigkeit von 9 × 10⁵ N/m bis 2,0 × 10⁶ N/m umfasst und die zweite Schicht (20) eine zweite Steifigkeit von 1 × 10⁵ N/m bis 3 × 10⁵ N/m umfasst, und
wobei die erste Steifigkeit und die zweite Steifigkeit gemäß dem Verfahren in der Beschreibung gemessen werden.

2. Stapelbaugruppe nach Anspruch 1, wobei das Klebematerial (15) eine Dicke von 25 Mikrometer bis 50 Mikrometer umfasst.

## Revendications

1. Ensemble empilement, comprenant :
un élément en verre (30) comprenant une épaisseur inférieure ou égale à 200 microns ; et
une couche de support adjacente à l'élément en verre (30), la couche de support comprenant une première couche (10) et une seconde couche (20),
ladite première couche (10) comprenant un premier matériau et un matériau adhésif (15) qui lie le premier matériau à l'élément en verre (30),
ladite première couche (10) comprenant une première rigidité allant de 9 × 10⁵N/m à 2,0×10⁶N/m, et ladite seconde couche (20) comprenant une seconde rigidité allant de 1 × 10⁵ N/m à 3 × 10⁵ N/m, et
ladite première rigidité et ladite seconde rigidité étant mesurées selon le procédé de la description.

2. Ensemble empilement selon la revendication 1, ledit matériau adhésif (15) comprenant une épaisseur de 25 microns à 50 microns.
